# FASCICULE DE BREVET EUROPEEN

(11) **EP 3 033 938 B1**
(45) Date de publication et mention de la délivrance du brevet: **02.08.2017**
(21) Numéro de dépôt: 15200710.0
(22) Date de dépôt: 17.12.2015
(51) Int. Cl.: A01F 29/00, A01D 87/12

(54) **DÉROULEUSE-PAILLEUSE**
STROHABWICKEL- UND -VERTEILUNGSVORRICHTUNG
SPOOLER-BALER

(30) Priorité: 19.12.2014 FR 1462859
(43) Date de publication de la demande: 22.06.2016
(73) Titulaire: Etablissements Emily, 29800 Treflevenez (FR)
(72) Inventeur: MIOSSEC, Arnaud, 29440 Plouzevede (FR); RUNGOAT, David, 29800 Treflevenez (FR); GUENGANT, Michel, 29440 Plougar (FR); PODEUR, François, 29800 Pencran (FR)
(74) Mandataire: Le Guen-Maillet

(56) Documents cités:
- WO-A1-94/03043
- FR-A1- 2 679 152
- FR-A1- 2 849 985
- FR-A1- 2 972 602
- US-A1- 2013 193 247

## Description

La présente invention se rapporte à une dérouleuse-pailleuse destinée, notamment, à être attelée et portée directement par un engin de levage ou indirectement, par l'intermédiaire d'un porte-outil conçu pour être attelé et porté par ledit engin de levage. Elle peut encore être déplacée par un convoyeur aérien. Une version tractée ou automotrice entre également dans le cadre de la présente invention. La dérouleuse-pailleuse de l'invention est une machine conçue pour, soit pailler une botte de fourrage cylindrique, parallélépipédique, pour former une litière, soit dérouler une botte cylindrique sur le sol ou dans des mangeoires pour servir d'alimentation à des animaux, comme des bovins.

Dans l'invention, le paillage est une opération qui consiste à déchiqueter une botte de fourrage, puis à projeter ses fibres sur le sol afin de former une litière.

Le déroulage consiste à défaire une botte cylindrique par une opération de désenroulage de sa nappe enroulée et compressée.

Ce type de machine est communément appelée dérouleuse, pailleuse, quand elle ne réalise qu'une de ces deux fonctions ou encore dérouleuse-pailleuse dans la mesure où la machine réalise le déroulage et le paillage.

Une dérouleuse-pailleuse connue de l'état de la technique, et proposée par la demanderesse se présente de la manière suivante. Cette machine est pourvue d'un châssis destiné à être porté par un engin de levage pour être déplacée sur le site d'élevage des animaux afin de la faire fonctionner. Le châssis de la machine porte sur l'un de ses bords longitudinaux, deux bras articulés qui tiennent de part et d'autre un rotor de paillage mobile entre une position haute de paillage où il est actif et une position basse de déroulage où il est inactif. Le rotor de paillage est susceptible d'être entraîné à rotation par l'intermédiaire d'un moteur hydraulique.

Le châssis porte encore un moyen de transport de la botte vers le rotor, et qui est entraîné par l'intermédiaire d'un moteur hydraulique susceptible d'être alimenté par le circuit hydraulique de l'engin porteur. Le moyen de transport est constitué, dans un mode de réalisation avantageux, d'un convoyeur à tasseaux fixés sur deux chaînes circulant en boucle autour de deux axes pourvus de roues dentées et dont l'un est accouplé avec ledit moteur hydraulique pour faire circuler les tasseaux d'entraînement de la botte de fourrage. Le châssis est pourvu d'une plaque support concave et sur laquelle repose la botte. Le déplacement des tasseaux sur cette plaque concave provoque le déroulage de la nappe qui la constitue.

Dans la position haute des bras articulés, le rotor de paillage en fonctionnement happe cette nappe, la déchiquette et expulse les brins. Dans la position basse des bras articulés, la botte est simplement déroulée et sa nappe passe par dessus le rotor à l'arrêt pour être déposée sur le sol ou dans des mangeoires. Le paillage et le déroulage sont réalisés du même côté.

Dans un autre modèle de dérouleuse-pailleuse connu, on utilise également deux bras articulés tenant à leurs extrémités, un rotor de paillage mobile entre une position basse et active de paillage et une position haute inactive de déroulage. Dans la position haute, les couteaux du rotor à l'arrêt parviennent à accrocher la nappe qui se déroule par en dessous lorsque l'on déroule la botte. Dès lors un bourrage parvient à se former. On peut, certes, augmenter la longueur des bras pour les surélever dans sa position haute, mais on accroît la largeur de la machine dans la position basse de travail du rotor et celui-ci devient trop éloigné de la botte pour pailler correctement.

Un autre modèle de dérouleuse-pailleuse est également présenté dans le brevet : FR-B-2 972 602. Elle convient pour dérouler une botte cylindrique de fourrage ou pour déchiqueter aux fins de paillage une botte parallélépipédique. Le châssis de la machine est pourvu d'un fond mobile plat constitué de tasseaux fixés sur deux chaînes entraînées en boucle autour de deux rouleaux et dont l'un est moteur. Les tasseaux circulent dans leur trajet supérieur sur une plaque plane horizontale sur laquelle a été déposée une botte pour être déroulée ou paillée. Le châssis porte un rouleau rotatif inférieur et un rouleau rotatif supérieur. La machine peut fonctionner suivant deux configurations : une première configuration de démêlage de bottes parallélépipédiques dans laquelle le rouleau supérieur occupe une première position active de démêlage sensiblement au droit du rouleau inférieur, une seconde configuration de déroulage de bottes cylindriques dans laquelle le rouleau supérieur occupe une deuxième position passive découvrant le rouleau rotatif inférieur. Là encore, le paillage et le déroulage sont réalisés du même côté.

Connaissant cet état de la technique, la demanderesse a cherché à concevoir une machine capable d'améliorer l'efficacité du paillage et d'améliorer l'efficacité du déroulage.

A cet effet, est proposée une dérouleuse-pailleuse destinée à, soit pailler une botte de fourrage cylindrique ou parallélépipédique pour former une litière, soit s'agissant d'une botte cylindrique la dérouler sur le sol, dans des mangeoires ou, pour servir d'alimentation à des animaux, tels que des bovins, la dérouleuse-pailleuse comprenant :
- un organe de paillage,
- un moyen d'appui destiné à réceptionner une botte,
- un moyen d'entraînement de la botte conçu pour la déplacer en direction de l'organe de paillage afin qu'elle puisse être déchiquetée par ledit organe de paillage en fonctionnement ; selon l'invention, le moyen d'entraînement est pourvu de moyens de déplacement conçus pour déplacer la botte suivant deux sens, de directions opposées, l'un vers l'organe de paillage pour pailler ladite botte et l'autre, à l'opposé de l'organe de paillage, pour la dérouler, la dérouleuse-pailleuse incluant un moyen de retenue de la botte évitant qu'elle ne soit déchargée pendant son déroulage.

Le paillage de la botte est réalisé d'un côté de la machine. Le déroulement de la botte est réalisé de l'autre côté de la machine. Ces deux fonctions peuvent ainsi être optimisées individuellement et indépendamment l'une de l'autre.

Sa construction, sans bras articulés des machines connues, est relativement moins coûteuse.

Selon une caractéristique additionnelle de l'invention, le moyen d'appui présente une partie plane et sensiblement horizontale dans la position de travail de la dérouleuse-pailleuse et qui se prolonge par une partie incurvée et montante, l'extrémité libre de la partie plane s'étendant jusqu'en dessous de l'organe de paillage, la partie incurvée et montante prolongeant ladite partie plane du côté opposé à l'organe de paillage en s'étendant vers l'extérieur de la dérouleuse-pailleuse de sorte à former le moyen de retenue de ladite botte.

La partie plane sert d'assise pour une botte parallélépipédique ou cylindrique lorsqu'elle est déplacée vers l'organe de paillage. La partie incurvée et montante oblige une botte cylindrique à constamment redescendre vers la partie plane du fond de la machine, au cours de son déroulage.

Selon une caractéristique additionnelle de l'invention, la partie plane et la partie incurvée et montante sont constituées d'une tôle et le moyen de déplacement de la botte comprend des tasseaux qui, dans la partie supérieure de leur trajet, glissent sur ladite tôle.

La botte est déposée sur le fond en tôle de la dérouleuse-pailleuse et les tasseaux peuvent la mouvoir d'un bord ou de l'autre. Cette construction est simple à réaliser.

Selon une caractéristique additionnelle de l'invention, la dérouleuse-pailleuse comporte deux flancs et un volet est monté de manière articulée entre les deux flancs, ledit volet étant disposé au-dessus de l'organe de paillage pour faire ricocher les fibres arrachées par l'organe de paillage afin de les diriger suivant une trajectoire choisie.

On peut définir précisément le lieu de paillage en orientant le volet.

Selon une caractéristique additionnelle de l'invention, un rouleau est disposé entre les deux flancs et au-dessus de l'organe de paillage, pour servir de butée à l'encontre de ladite botte alors qu'elle est déplacée par le moyen d'entraînement en direction de l'organe de paillage.

Ce rouleau régule le travail des couteaux.

Selon une caractéristique additionnelle de l'invention, les axes de deux engrenages ressortent au travers du premier flanc, les deux engrenages étant reliés mécaniquement, au moyen d'entraînement de la botte et à l'organe de paillage, pour les faire fonctionner.

Cette construction avec des engrenages situés d'un même côté et à l'extérieur de la machine permet à celle-ci d'être mise en service par des engrenages correspondants, par exemple lorsqu'elle est attelée à un porte-outil pourvu de tels engrenages capables de faire fonctionner son moyen d'entraînement, son organe de paillage.

Selon une caractéristique additionnelle de l'invention, la dérouleuse-pailleuse dispose d'un attelage mécanique sur l'un ou sur ses deux flancs.

La machine peut être attelée par l'un ou l'autre de ses deux flancs. On accroît ainsi sa modularité d'usage en choisissant le côté gauche ou le côté droit dévolu à la fonction choisie : paillage ou déroulage.

Selon une caractéristique additionnelle de l'invention, l'axe d'un engrenage ressort du second flanc, ledit engrenage étant relié mécaniquement au moyen d'entraînement de la botte, pour le faire fonctionner.

En attelant la dérouleuse-pailleuse par son premier ou son second flanc, sur un porte-outil, il devient possible de dérouler la botte de fourrage par la gauche ou par la droite.

Selon une caractéristique additionnelle de l'invention, l'axe d'un autre engrenage ressort du second flanc, ledit engrenage étant relié mécaniquement à l'organe de paillage de la botte, pour le faire fonctionner.

En attelant la dérouleuse-pailleuse par son premier ou son second flanc, sur un porte-outil, il devient possible de pailler la botte de fourrage par la gauche ou par la droite.

Selon une caractéristique additionnelle de l'invention, le moyen d'entraînement de la botte comprend un arbre pourvu de deux pignons, d'un cylindre, qui sont tenus entre les deux flancs et autour desquels peuvent circuler en boucle deux chaînes portant lesdits tasseaux et une transmission par chaîne et pignons relie l'engrenage avec ledit arbre, le premier pignon étant coaxial à l'axe dudit l'engrenage, le second pignon étant coaxial à l'axe dudit arbre.

Les deux engrenages de la dérouleuse-pailleuse sont relativement rapprochés l'un de l'autre. Cette conception autorise une construction pratiquement symétrique de la machine. Elle peut alors être attelée, le cas échéant, sur l'un ou sur son autre flanc pour un encombrement semblable.

Selon une caractéristique additionnelle de l'invention, l'organe de paillage comprend un arbre moteur entouré d'un cylindre portant en périphérie des couteaux et qui, pendant leur rotation, peuvent grignoter la périphérie de la botte pour la défragmenter, un engrenage étant monté de manière coaxiale à une extrémité ou aux deux extrémités de l'axe dudit arbre moteur.

L'organe de paillage peut être entraîné à l'aide d'un engrenage extérieur.

Selon une caractéristique additionnelle de l'invention, une bavette est disposée au-dessus du rouleau, entre les flancs.

Elle est ainsi en mesure de rabattre par le dessous les projections des fibres arrachées par l'organe de paillage et qui ne sont pas dirigées sur le volet, sur le rouleau.

Selon une caractéristique additionnelle de l'invention, une seconde bavette est disposée sous l'extrémité du moyen d'entraînement sortant sous l'organe de paillage.

Elle dévoie vers l'extérieur, les fibres arrachées qui retombent sous l'organe de paillage.

Selon une caractéristique additionnelle de l'invention, l'organe de paillage, le moyen d'entraînement, sont reliés respectivement à deux moteurs et préférentiellement des moteurs hydrauliques.

Selon une caractéristique additionnelle de l'invention, la dérouleuse-pailleuse est associée à un porte-outil destiné à être porté par un engin de levage pour la déplacer, la faire fonctionner.

Cette interface facilite l'usage de la dérouleuse-pailleuse.

Selon une caractéristique additionnelle de l'invention, le porte-outil comprend au moins deux engrenages conçus et disposés de manière à coopérer avec des engrenages portés par ladite dérouleuse pailleuse.

Selon une caractéristique additionnelle de l'invention, la dérouleuse-pailleuse est pourvue d'un moyen d'accrochage destiné à permettre sa suspension par un convoyeur aérien capable de la déplacer.

Selon une caractéristique additionnelle de l'invention, la dérouleuse-pailleuse intègre un châssis porté par au moins un train roulant permettant son déplacement sur le sol par l'intermédiaire d'un engin de traction.

Selon une caractéristique additionnelle de l'invention, la dérouleuse-pailleuse est intégrée dans un engin roulant automoteur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue en perspective d'une dérouleuse-pailleuse destinée à être accouplée et portée par un porte-outil préalablement attelé à un engin de levage selon l'invention,
la Fig. 2a représente une vue en perspective avant d'un porte-outil destiné à être attelé à un engin de levage selon l'invention,
la Fig. 2b représente une vue en perspective arrière d'un porte-outil destiné à être attelé à un engin de levage selon l'invention,

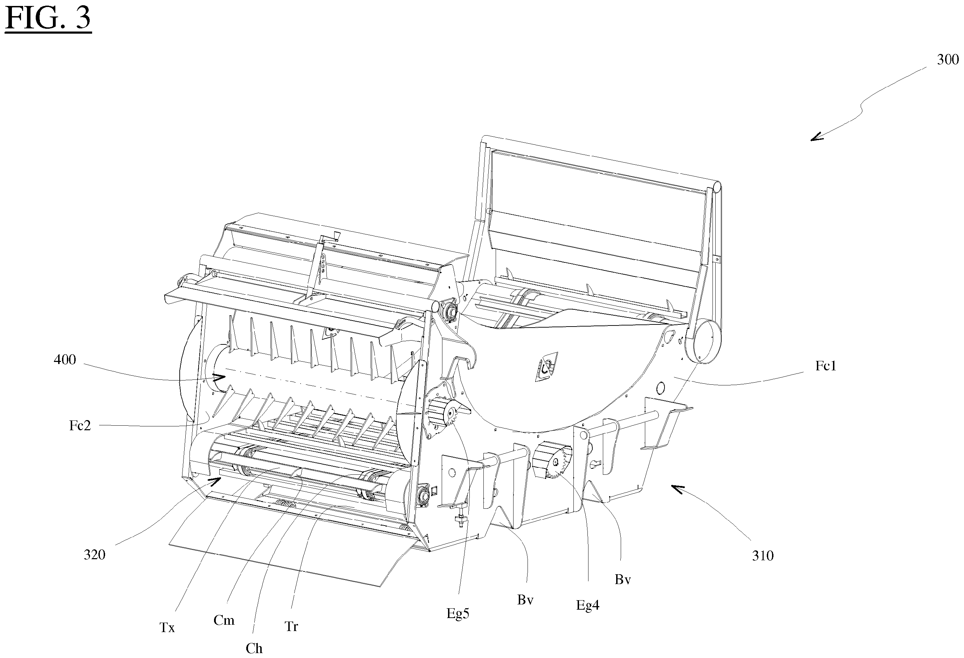

la Fig. 3 représente une vue en perspective d'une dérouleuse-pailleuse selon l'invention,
la Fig. 4 représente une vue latérale schématique en coupe d'une dérouleuse-pailleuse, dans une configuration de paillage selon l'invention,
la Fig. 5 représente une vue en perspective d'une dérouleuse-pailleuse accouplée à un porte-outil selon l'invention,
la Fig. 6 représente une vue latérale schématique en coupe d'une dérouleuse-pailleuse, dans une configuration de déroulage selon l'invention,
la Fig. 7a représente une vue de dessus d'une dérouleuse-pailleuse et d'un porte-outil selon l'invention,
la Fig. 7b représente une vue de dessus d'une variante de réalisation d'une dérouleuse-pailleuse et d'un porte-outil selon l'invention,
la Fig. 7c représente une vue de dessus d'une autre variante de réalisation d'une dérouleuse-pailleuse et d'une variante de réalisation d'un porte-outil selon l'invention,
la Fig. 8a représente une vue schématique en coupe d'une version simplifiée d'une dérouleuse-pailleuse, dans une configuration de paillage selon l'invention,
la Fig. 8b représente une vue schématique en coupe d'une version simplifiée d'une dérouleuse-pailleuse, dans une configuration de déroulage selon l'invention,
la Fig. 8c représente une vue schématique en coupe d'une version simplifiée d'une dérouleuse-pailleuse selon la Fig. 8a, la machine incorporant un moyen de retenue selon l'invention,
la Fig. 8d représente une vue schématique en coupe d'une version simplifiée d'une dérouleuse-pailleuse selon la Fig. 8a, la machine incorporant un moyen de retenue et de décompactage de la nappe déroulée de la botte selon l'invention,
la Fig. 8e représente une vue schématique en coupe d'une autre version simplifiée d'une dérouleuse-pailleuse et dont le moyen d'entraînement comprend un tapis roulant selon l'invention,
la Fig. 8f représente une vue schématique en coupe d'une seconde version simplifiée d'une dérouleuse-pailleuse et dont le moyen d'entraînement comprend des chaînes et des tasseaux selon l'invention et,
la Fig. 9 représente une vue schématique en coupe d'une version simplifiée d'une dérouleuse-pailleuse en cours de paillage d'une botte parallélépipédique selon l'invention.

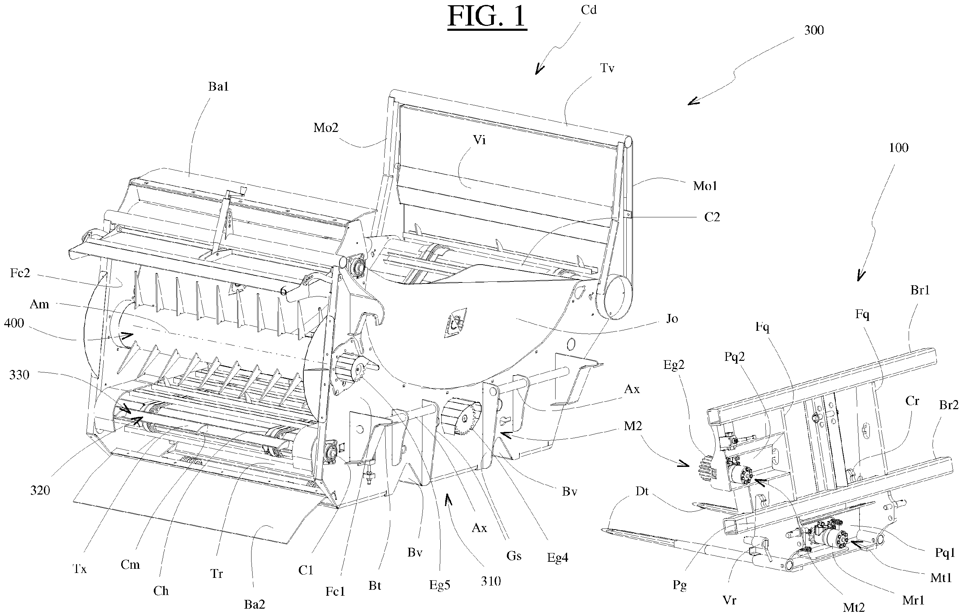

Le porte-outil 100 présenté sur la Fig. 1 est conçu pour être attelé à un engin de levage pour porter une dérouleuse-pailleuse 300, la déplacer et la faire fonctionner. Il est présenté dans sa position normale d'utilisation. L'engin est par exemple pourvu d'un bras de levage à l'extrémité duquel il convient de fixer le porte-outil, un tracteur dont le système de relevage hydraulique à trois points sert à fixer ledit porte-outil.

La dérouleuse-pailleuse 300 est un accessoire destiné à porter et défaire une botte cylindrique. Elle est conçue pour réaliser deux fonctions :
- Pailler, c'est-à-dire, défragmenter et projeter les fibres d'une botte cylindrique, parallélépipédique, pour former une litière par éparpillement.
- Dérouler la nappe enroulée d'une botte cylindrique pour la déposer au sol, dans une mangeoire en guise de fourrage pour des animaux. Elle est présentée dans sa position normale d'utilisation, c'est-à-dire reposant sur le sol pour pouvoir être attelée avec le porte-outil.

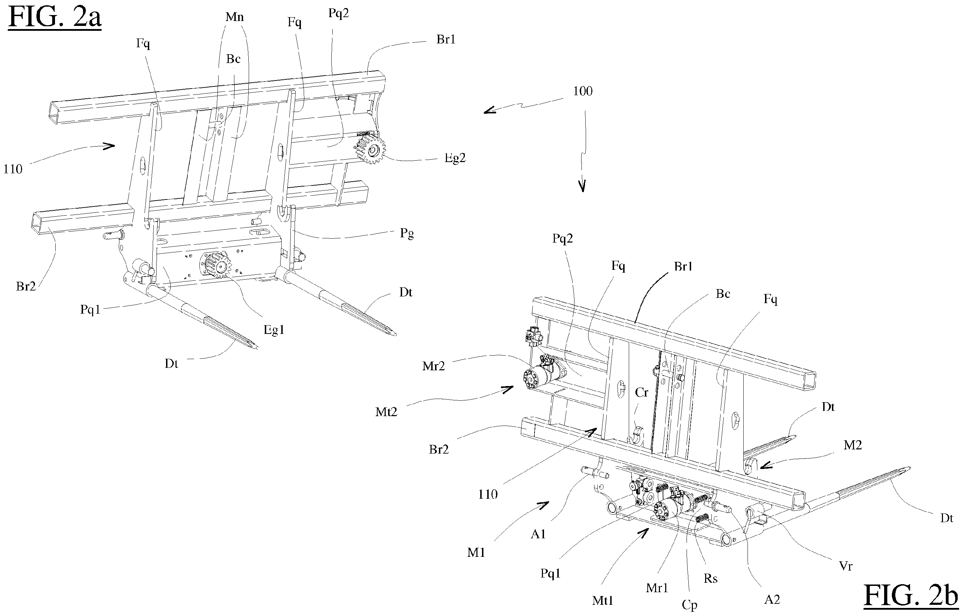

Sur les Figs. 2, le porte-outil 100 comprend un châssis 110 supportant au moins un doigt Dt destiné à piquer une botte pour pouvoir la porter dans la dérouleuse, au moins une barre Br pare-botte horizontale formant, notamment, une butée pour celle-ci, au moins un moyen d'attelage M1 avec l'engin porteur, un moyen d'accouplement M2 avec la dérouleuse-pailleuse, un premier moyen d'entraînement Mt1 capable de faire fonctionner au moins un organe de la dérouleuse-pailleuse susceptible d'être accouplée avec le porte-outil 100, un second moyen d'entraînement Mt2 capable de faire fonctionner au moins un autre organe de la dérouleuse-pailleuse 300.

Le châssis 110 comprend deux flasques Fq verticaux et parallèles entre eux et qui sont réunis par deux barres pare-botte Br1 et Br2 qui s'étendent vers l'extérieur, ainsi que par l'intermédiaire d'une plaque Pq1, par exemple fabriquée dans une feuille de tôle et sur laquelle est fixé le premier moyen d'entraînement Mt1. Deux doigts Dt sont également fixés sur les bords inférieurs des deux flasques Fq en s'étendant horizontalement dans une direction perpendiculaire aux deux barres pare-botte Br. Les doigts Dt sont montés, sur ces Figs. 2, dans deux fourreaux et sont fixés par des vis de manière à permettre leur remplacement. La plaque de tôle Pq1 est formée de plusieurs plis pour renforcer la structure du châssis 110. Elle comprend ainsi un pli inférieur formant retour et qui relie les deux fourreaux. Deux tasseaux sont fixés sous ce pli inférieur et servent d'assise au porte-outil pour qu'il puisse reposer sur le sol.

Au moins un montant Mn relie verticalement les deux barres pare-botte Br. Deux montants Mn, présentant une géométrie en équerre, sont interposés sur ces Figs. 2 entre les deux barres Br. Le moyen d'attelage M1 avec l'engin est destiné à solidariser le porte-outil 100 sur le relevage trois points de l'engin porteur. Il comprend deux axes A1 et A2 traversant respectivement les deux flasques Fq et une série de trous traversant les deux montants Mn et dont une paire est utilisée pour réceptionner une broche Bc de fixation d'un vérin mécanique au troisième point de relevage. Un second moyen d'attelage peut être implanté sur le châssis 110, pour atteler le porte-outil 100, par exemple, sur l'extrémité du bras manipulateur d'un engin de levage, communément appelé « télescopique ». Les barres Br sont à cet effet utilisées pour fixer ce second moyen d'attelage sur l'engin porteur. Ce moyen d'attelage, démontable, est installé en option, à la demande de l'acheteur. Il se compose, à cet effet, de ferrures qui peuvent être bridées sur les deux barres Br.

Sur la Fig. 1, la dérouleuse-pailleuse 300 se compose d'un berceau 310 formant un châssis, et dans lequel est disposé un moyen d'entraînement 320 capable de déplacer une botte de fourrage cylindrique pour l'entraîner vers un organe de paillage 400 ou pour la dérouler afin de la distribuer de manière défaite. Ce moyen d'entraînement 320 constitue un organe qui peut être entraîné par le porte-outil 100.

Le berceau 310 comprend deux flancs Fc1, Fc2, parallèles et qui présentent un bord supérieur concave de sorte à pouvoir border la paroi cylindrique de la botte. Ils sont réunis par l'intermédiaire de traverses Tr, pour constituer le châssis porteur de la machine. Deux joues Jo sont fixées sur le bord supérieur concave des deux flancs Fc pour contenir latéralement la botte.

Deux embrèvements Bv creusent le bord inférieur d'au moins un flanc pour y réceptionner respectivement les deux doigts Dt du porte-outil 100. Avantageusement, deux traverses prolongent le profil de ces deux embrèvements Bv afin de pouvoir faire porter une partie de la masse de la machine sur les départs de ces deux doigts lorsque la dérouleuse-pailleuse 300 est attelée sur le porte-outil 100.

L'organe d'entraînement 320 se compose d'un arbre C1 pourvu de deux pignons, d'un cylindre C2, qui sont tenus entre les deux flancs Fc et autour desquels peuvent circuler en boucle deux chaînes Ch. Celles-ci sont pourvues de galets qui peuvent rouler directement autour de manchons montés autour du cylindre C2. Les chaînes portent des moyens de déplacement 330 constitués, sur cette Fig. 1, de tasseaux Tx fixés à intervalles réguliers sur lesdites chaînes de sorte à pouvoir déplacer la botte, la faire tourner. Les tasseaux Tx peuvent être pourvus de crampons Cm pour mordre la surface cylindrique de la botte pour mieux l'entraîner à rotation. Les tasseaux Tx meuvent la botte alors qu'elle a été préalablement déposée sur un fond formant un moyen d'appui pour la botte et constitutif de la machine 300. Le fond est dans un mode de réalisation préférentiel une plaque de tôle disposée entre les deux flancs.

Dans une variante de réalisation, non représentée, l'organe d'entraînement est un tapis roulant pourvu, le cas échéant, des mêmes moyens de déplacement. Le tapis forme alors un moyen d'appui pour la botte, c'est-à-dire un fond capable de réceptionner la botte. La trajectoire du tapis roulant est définie par des moyens de guidage appropriés.

Le moyen d'accouplement M2 se compose, d'une part, d'un attelage mécanique capable de fixer la dérouleuse-pailleuse 300 sur le porte-outil 100 pour qu'elle puisse être portée et déplacée par celui-ci et, d'autre part, d'une structure particulière des moyens d'entraînement Mt du porte-outil 100 vis-à-vis de la dérouleuse-pailleuse 300, et qui peuvent être activés pendant l'attelage de la dérouleuse-pailleuse de sorte que le porte-outil 100 est en mesure de faire fonctionner l'organe d'entraînement 320 de la dérouleuse, dans un sens ou dans l'autre, l'organe de paillage 400, à l'issue de l'accouplement de la dérouleuse-pailleuse 300 sur le porte-outil 100.

L'attelage mécanique comprend une paire de crochets Cr fixés sur les flasques Fq du porte-outil 100 et qui peuvent respectivement soulever deux axes Ax solidaires d'un flanc Fc de la dérouleuse-pailleuse 300.

Les axes Ax sont déportés du flanc Fc par l'intermédiaire de goussets Gs, pour permettre leur accrochage par les crochets. On remarquera que les crochets et les axes pourraient être inversés. Dans ce cas, les deux axes solidaires du porte-outil sont retenus pendant son soulèvement dans les deux crochets solidaires de la dérouleuse.

Le moyen d'entraînement Mt1 comprend, sur les Figs. 2, un moteur Mr1 et avantageusement un moteur hydraulique susceptible d'être alimenté, par l'intermédiaire de flexibles de raccordement, par une pompe hydraulique dont est pourvu l'engin porteur du porte-outil 100. Le moteur Mr1 est fixé d'un côté de la plaque Pq1. Le moyen d'entraînement Mt1 comprend encore un engrenage Eg1 tenu par l'arbre du moteur Mr1.

Un second engrenage Eg2, visible sur les Figs. 1 et 2a, est agencé pour pouvoir entraîner à rotation, l'organe de paillage 400 de la dérouleuse-pailleuse 300.

Les deux engrenages Eg1 et Eg2 sont à axes parallèles pour faciliter leur engrènement avec deux autres engrenages à axes parallèles de la dérouleuse-pailleuse 300. Les deux engrenages sont du type à denture droite, ce qui ne génère pas de forces avec des composantes axiales sur les arbres porteurs.

Sur les Figs. 2, le premier engrenage Eg1 est tenu par l'arbre du moteur Mr1 qui traverse la plaque Pq1 de sorte qu'il est disposé de l'autre côté de la plaque et plus précisément du côté des doigts Dt pour être tourné vers la dérouleuse-pailleuse à accoupler.

De façon plus précise, le moteur Mr1 est fixé sur une contre-plaque Cp assemblée à l'arrière de la plaque Pq1 et qui est maintenue plaquée contre elle par l'intermédiaire d'un moyen de rappel, tel qu'au moins un ressort Rs. Quatre ressorts disposés aux encoignures de la plaque sont mis en oeuvre sur la Fig. 2b. Les ressorts sont précontraints par des vis de fixation de la contre-plaque Cp sur la plaque Pq1. Ce montage flottant protège l'arbre du moteur Mr des chocs éventuels appliqués sur l'engrenage Eg1.

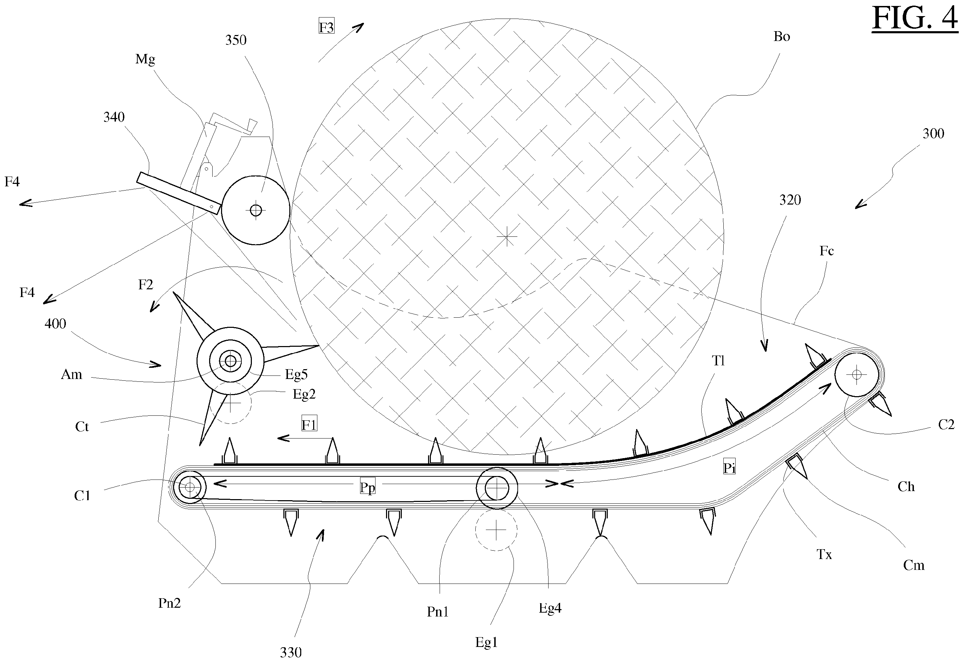

Sur la Fig. 4, la dérouleuse-pailleuse 300 est pourvue d'un engrenage Eg4 destiné à faire fonctionner l'organe d'entraînement 320 de la botte Bo. Un pignon Pn1 est monté de manière coaxiale à cet engrenage Eg4 pour entraîner à l'aide d'une transmission, telle qu'une transmission par chaîne sur cette Fig. 4, un second pignon Pn2 fixé directement sur l'arbre C1. Cet arbre, lorsqu'il est entraîné à rotation, fait circuler en boucle les deux chaînes porteuses des tasseaux Tx équipés de leurs crampons Cm.

Sur la Fig. 1, le moteur Mr1 est fixé sur la plaque Pq1 de sorte que le premier engrenage (non visible) qu'il porte puisse être positionné en dessous de l'engrenage Eg4, quand la dérouleuse-pailleuse 300 est accouplée au porte-outil 100.

Un moyen de guidage du porte-outil 100 vis-à-vis de la dérouleuse-pailleuse 300 agit, pendant l'attelage, dans une direction de levage du porte-outil est qui est perpendiculaire à celle des axes des deux engrenages ou pour le moins à l'axe du premier engrenage. Il comprend la paire de flasques Fq dont les rebords situés sous les crochets Cr constituent une paroi de guidage Pg qui glisse verticalement ou dans une direction quasi verticale, le long du flanc Fc1 porteur de l'engrenage Eg4, pendant l'attelage.

Compte tenu que la dérouleuse-pailleuse 300 est suspendue sur le porte-outil 100, il n'est pas indispensable de les verrouiller mutuellement. Cependant, au moins un verrou Vr, visible sur la Fig. 1, peut être utilisé. Il se compose d'un doigt rotatif et escamotable monté à coulissement dans un fourreau solidaire du porte-outil 100 et qui est terminé par un ergot perpendiculaire. Le doigt peut passer au travers d'un logement réalisé dans le flanc Fc porteur de l'engrenage Eg4 et qui est élargi localement par une fente au travers de laquelle l'ergot peut passer puis ensuite tourner pour réaliser le verrouillage.

Au moins une butée Bt est fixée sur le flanc Fc de la dérouleuse-pailleuse 300 qui est pourvue de l'attelage mécanique et qui est conformée pour prendre appui sur une barre Br2 du porte-outil 100 pour accroître la stabilité de l'attelage. La butée est positionnée à l'extérieur des deux axes Ax. Elle est positionnée en deçà de la position du centre de gravité projetée sur le flanc Fc1.

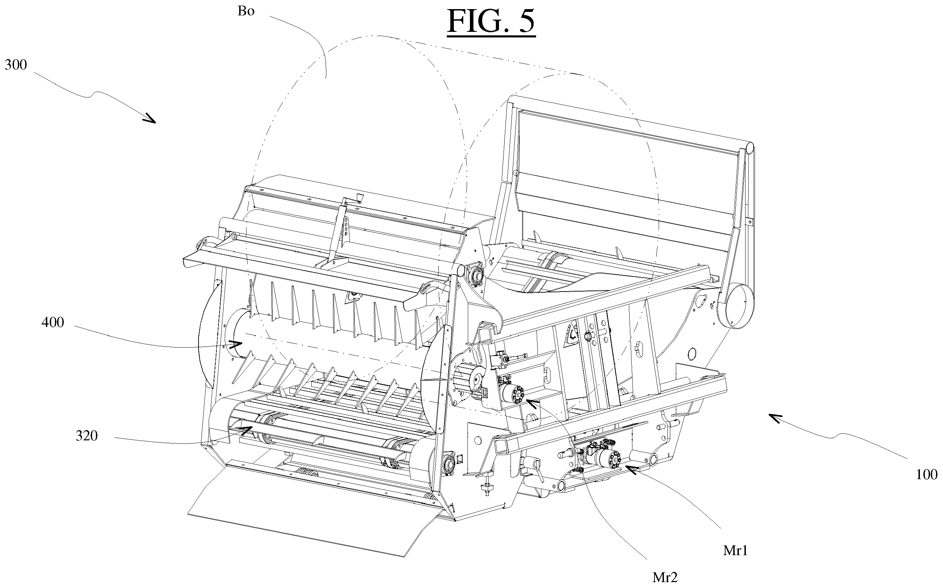

Sur la Fig. 5, la dérouleuse-pailleuse 300 est accouplée au porte-outil 100. Une botte Bo repose sur le moyen d'appui de la machine pour être déplacée en direction de l'organe de paillage 400, entraînée à rotation par l'organe d'entraînement 320, afin d'être soit paillée, soit déroulée et distribuée, dès lors que le moteur Mr1 fonctionne dans un sens ou dans l'autre.

Le porte-outil 100 de l'invention permet d'atteler rapidement la dérouleuse-pailleuse 300. Dès lors que la machine est attelée, elle peut être mise en service par le crabotage automatique des engrenages du porte-outil avec les engrenages correspondants de la dérouleuse-pailleuse 300, par simple levage du porte-outil 100.

Sur la Fig. 1, le flanc Fc2 partiellement caché peut comporter également des axes permettant un attelage mécanique, une butée conformée pour prendre appui sur une barre pare-botte Br1 du porte-outil 100. Deux embrèvements creusent le bord inférieur du flanc Fc2.

Ainsi, il est possible d'atteler la dérouleuse-pailleuse 300 sur le porte-outil 100 par l'un ou l'autre de ses deux flancs Fc1 ou Fc2.

Sur la Fig. 4, l'organe de paillage 400 de la dérouleuse-pailleuse 300 est destiné à défragmenter la botte Bo alors qu'elle est déplacée par l'organe d'entraînement 320 en direction dudit organe de paillage 400, suivant la direction indiquée par la flèche F1.

Les tasseaux Tx de l'organe d'entraînement 320 circulent dans la partie supérieure de leur trajet en glissant sur le moyen d'appui de la botte Bo. Le moyen d'appui est constitué, sur cette Fig. 4, d'une tôle T1 sur laquelle il convient de déposer la botte avant de faire fonctionner la machine 300. Cette tôle Tl, faite préférentiellement de plusieurs feuilles soudées, présente une partie plane Pp et sensiblement horizontale dans la position de travail de la machine et qui se prolonge par une partie incurvée et montante Pi. La partie plane Pp et horizontale est tournée en direction de l'organe de paillage et est interrompue avant l'axe de l'arbre C1 alors que la partie incurvée Pi et montante prolonge la partie plane Pp dans une direction opposée à l'organe de paillage 400. La partie incurvée Pi et montante s'élance vers l'extérieur de la dérouleuse-pailleuse 300. Elle est interrompue avant l'axe du cylindre C2.

Ainsi, lorsque la botte Bo est déplacée sur la partie plane Pp de la tôle Tl par les tasseaux Tx, les crampons Cm, elle se déplace vers la gauche sur cette Fig. 4, en direction de l'organe de paillage 400 pour l'alimenter, comme l'indique la flèche F1.

On comprendra que lorsque l'organe d'entraînement 320 est un tapis roulant, la machine 300 comprend des moyens de guidage de la bande constitutive du tapis et qui la transporte suivant une trajectoire plane et une trajectoire incurvée et montante. A l'arrêt, le tapis roulant présente une même partie plane et une même partie incurvée et montante que lorsque le moyen d'appui est constitué d'une tôle.

L'organe de paillage 400 comprend un arbre moteur Am entouré d'un cylindre portant en périphérie des couteaux Ct et qui, pendant leur rotation, grignotent la périphérie de la botte Bo pour la défragmenter. L'arbre moteur Am est tenu entre les deux flancs Fc de la machine à une extrémité de celle-ci et à une hauteur suffisante pour que ses couteaux Ct s'approchent des crampons Cm, des tasseaux Tx, mais sans jamais les toucher. La vitesse de rotation de l'arbre moteur Am est relativement élevée et en pratique supérieure à 500 tours par minute, pour arracher avec célérité les fibres de la botte afin de les projeter pour former une litière. Les couteaux Ct sont disposés sur cette Fig. 4 sur trois rangées décalées de 120 ° pour attaquer simultanément la botte Bo. Dans une variante de réalisation, non représentée, les couteaux sont disposés en hélicoïde autour du cylindre pour qu'il y ait toujours au moins un couteau travaillant sur la botte.

Sur la Fig. 1, l'une des extrémités de l'arbre moteur Am et qui ressort au travers d'un flanc et ici le flanc Fc1 est montée dans un engrenage Eg5 destiné à engrener avec l'engrenage Eg2 porté par le porte-outil 100. Cet engrenage Eg2 est monté sur l'arbre d'un moteur Mt2 et avantageusement un moteur hydraulique susceptible d'être alimenté, par l'intermédiaire de flexibles de raccordement, par une pompe hydraulique dont est pourvu l'engin porteur du porte-outil 100. Ce moteur Mt2 est monté pratiquement de la même manière que le moteur Mt1, c'est-à-dire à l'arrière d'une plaque Pq2 tenue dans le châssis 110 du porte-outil 100. Celui-ci dispose ainsi de deux moyens d'entraînement Mt1, Mt2, capables de faire fonctionner deux organes de la dérouleuse-pailleuse 300 ou un autre accessoire nécessitant deux moyens d'entraînement distincts pour fonctionner.

Sur la Fig. 4, le sens de rotation de l'organe de paillage 400 est indiqué par la flèche F2. Son sens de rotation est tel qu'il arrache les fibres végétales de la botte Bo pour les projeter vers le haut et de manière oblique vers l'extérieur en direction d'un volet de percussion 340 qui fait ricocher les fibres vers l'extérieur de la machine. Le volet 340 est monté de manière articulée entre les deux flancs Fc, au-dessus de l'organe de paillage 400. Son orientation peut être réglée par l'intermédiaire d'un moyen de réglage Mg, constitué, par exemple d'un vérin à manivelle, pour définir la trajectoire d'éjection des fibres projetées par les couteaux Ct, symbolisée par les flèches F4.

Pendant l'entraînement de la botte Bo sous l'effet du fonctionnement du moyen de déplacement 330 et sous l'effet du grattage de bas en haut des couteaux Ct sur sa périphérie, la botte est entraînée à rotation suivant la flèche F3. Son sens de rotation est inverse du sens de rotation F2 de l'organe de paillage 400. La botte Bo étant entraînée à rotation, son diamètre s'amenuise régulièrement par le travail des couteaux Ct jusqu'à son noyau.

Afin que l'arrachage de ses fibres soit le plus régulier possible, la machine 300 incorpore une butée limitant l'avancement de la botte en direction de l'organe de paillage 400. Cette butée prend avantageusement la forme d'un rouleau 350 tenu entre les deux flancs Fc. Ce rouleau 350 est disposé au-dessus de l'organe de paillage 400, en deçà du volet 340. Il est de préférence monté libre à rotation pour ne pas freiner le mouvement de rotation de la botte.

Pour éviter une dispersion non contrôlée des fibres dispersées, une bavette Ba1, visible sur la Fig. 1, est disposée au-dessus du rouleau 350, entre les flancs Fc. La bavette s'étend globalement d'une manière horizontale vers l'intérieur de la dérouleuse-pailleuse 300. Elle est ainsi en mesure de rabattre par le dessous les projections des fibres arrachées qui ne sont pas dirigées sur le volet 340, sur le rouleau 350.

Dans le même but, une seconde bavette Ba2 est disposée sous l'extrémité du moyen d'entraînement 320 sortant sous l'organe de paillage 400. Elle s'étend vers l'extérieur pour dévoyer les fibres arrachées qui retombent sous l'organe de paillage 400 et de manière générale sous la machine. On réduit ainsi le travail de balayage de la logette à l'issue du travail de la machine.

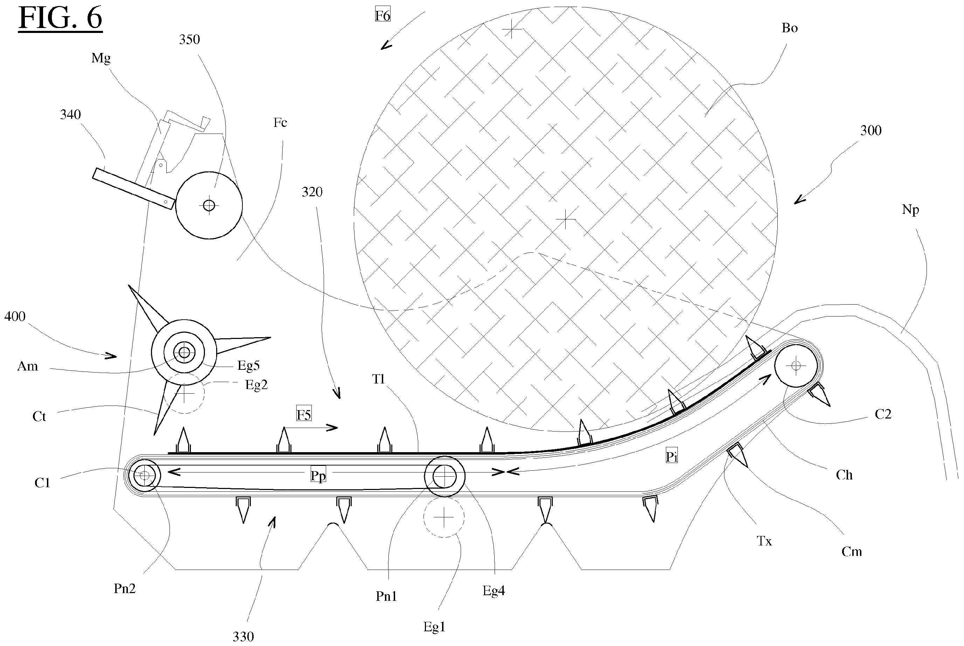

En référence à la Fig. 6, et pour procéder au déroulage de la nappe Np constitutive de la botte Bo, celle-ci est préalablement déposée sur le moyen d'appui de la machine. Elle doit être placée avec sa nappe Np pouvant se dérouler sur la partie incurvée et montante Pi de la tôle Tl. Le sens de transport du moyen d'entraînement 320 est inversé, suivant en cela la direction F5, opposée à la direction de transport convenant pour le paillage figurant sur la Fig. 4. Le fonctionnement de l'organe de paillage 400 est interrompu pendant le déroulage de la botte Bo pour éviter toute projection de fibres végétales et réduire la puissance consommée de la machine 300. Une simple vanne 3 voies est utilisée dans le porte-outil pour couper l'alimentation de son second moteur. Son sens de dévidement, illustré par la flèche F6, est inverse à celui du paillage. La partie incurvée et montante Pi de la tôle Tl, présente du côté opposé à l'organe de paillage 400 oblige la botte Bo à constamment redescendre vers la partie plane Pp de la tôle Tl au cours de son déroulage, pendant le fonctionnement du moyen d'entraînement 320. Cette partie incurvée et montante Pi forme un moyen de retenue de la botte évitant qu'elle ne soit déchargée pendant son déroulage. La nappe Np est déroulée par-dessus l'extrémité libre de la partie incurvée et montante Pi, c'est-à-dire au-delà du moyen d'entraînement 320, pour tomber sur le sol ou dans des mangeoires prévues à cet effet.

Sur la Fig. 1, un cadre Cd pourvu d'un volet intermédiaire Vi est monté à cheval sur les deux flancs Fc de la dérouleuse-pailleuse 300. Il est destiné à border la botte pendant son transport, pendant son paillage en évitant que la nappe qui est défaite par l'organe de paillage ne s'échappe de l'autre côté de la machine. Le cadre Cd est formé de deux montants Mo s'étendant vers le haut en étant fixés sur les deux flancs Fc et réunis par une traverse Tv. Le volet intermédiaire Vi est monté de matière articulée entre les deux montants Mo. Il est constitué d'une plaque pliée en forme de V saillante vers l'intérieur de la machine 300 et pendante sous l'effet de la gravité par deux articulations situées sur son bord supérieur. Le cadre Cd peut être positionné dans une configuration de paillage tel qu'il apparaît sur cette Fig. 1, en faisant obstacle à la nappe de la botte à l'aide du volet Vi et une configuration de déroulage de la botte où il est incliné vers l'arrière et vers le bas de la machine pour laisser la nappe de fourrage se dérouler sous l'effet du fonctionnement du moyen d'entraînement 320, le volet demeurant dans une position verticale. Dans sa configuration de paillage, le volet Vi peut être bloqué dans une position verticale à l'aide de loquets pour retenir la nappe défaite.

L'attelage de la dérouleuse-pailleuse 300 se présente de la manière suivante en référence aux Figs. 1 et 2. Le porte-outil 100 est attelé et raccordé à un engin puis est avancé de sorte que ses doigts Dt passent sous la dérouleuse-pailleuse 300.

La paroi de guidage Pg des flasques Fq est mise en contact sur le flanc Fc de la dérouleuse-pailleuse 300 puis, par un mouvement d'élévation du porte-outil 100, les crochets Cr viennent porter les axes Ax pour soulever la dérouleuse-pailleuse 300. Les dentures des deux engrenages Eg1 et Eg2 s'engrènent alors mutuellement avec les dentures des engrenages Eg4 et Eg5 de la machine 300 pendant le mouvement de glissement de la paroi de guidage Pg sur ledit flanc. La paroi de guidage Pg constitue également une butée sur laquelle la dérouleuse-pailleuse 300 s'appuie à l'issue de son attelage.

On remarquera qu'il n'est pas nécessaire que la paroi de guidage Pg entre impérativement en contact avec le flanc Fc de l'accessoire pour réaliser l'accouplement de celui-ci avec le porte-outil, compte tenu de l'imprécision de la position relative du porte-outil vis-à-vis de la dérouleuse-pailleuse. L'accouplement est obtenu quand les axes Ax sont positionnés dans les crochets Cr, puis, par un soulèvement consécutif du porte-outil 100, la dérouleuse-pailleuse 300 est mise en butée par gravité sur la butée Bt du porte-outil 100.

Les moteurs Mr1 et Mr2 sont alors en mesure d'entraîner l'organe d'entraînement 320 et l'organe de paillage 400 de la dérouleuse-pailleuse 300, par l'intermédiaire d'une commande disposée à l'intérieur de la cabine de l'engin porteur.

Les contraintes de conception de l'organe de paillage 400 de la dérouleuse-pailleuse 300 de l'invention sont moindres que dans les machines connues, puisque la fonction de paillage n'est pas perturbée par la fonction de déroulage qui est réalisé de l'autre bord de la machine. Par ailleurs, le déroulage n'est pas perturbé par la présence de l'organe de paillage. La dérouleuse-pailleuse 300 est capable de pailler d'un bord latéral de la machine et de dérouler de l'autre bord, offrant ainsi une modularité d'usage meilleure que les dérouleuses-pailleuses connues, qui réalisent ces deux opérations uniquement du même côté. Elle est d'une construction relativement simple comparée aux dérouleuses-pailleuses connues de l'état de la technique.

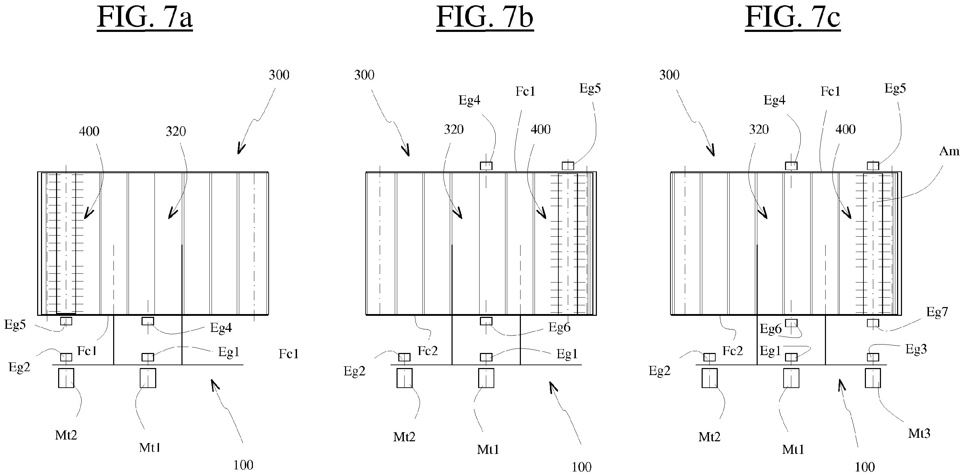

Sur la Fig. 7a, la dérouleuse-pailleuse 300 et son porte-outil 100 qui viennent d'être présentés sont dessinés en vue de dessus. Ce dernier dispose de deux moteurs Mt1 et Mt2 équipés respectivement de deux engrenages Eg1 et Eg2 capables de coopérer avec les deux engrenages correspondants Eg4 et Eg5 de la dérouleuse-pailleuse 300. La dérouleuse-pailleuse 300 peut n'être pourvue que d'un seul attelage mécanique avec le porte-outil 100 et qui est solidaire du flanc Fc1 d'où ressortent les deux engrenages Eg4 et Eg5.

Sur la Fig. 7b, la dérouleuse-pailleuse 300 dispose, dans une première variante de réalisation, d'un second attelage mécanique au porte-outil 100 et qui est fixé sur son second flanc Fc2. La dérouleuse-pailleuse 300 est tournée de 180 ° par rapport à la Fig. 7a pour être attelée sur son second flanc Fc2. La dérouleuse-pailleuse 300 dispose d'un engrenage supplémentaire portant la référence Eg6 et qui sert à faire fonctionner son organe d'entraînement 320. Cet engrenage Eg6 ressort au travers du flanc Fc2. Il est capable d'entraîner, par l'intermédiaire d'une transmission par chaîne, le moyen d'entraînement 320 de la botte. Cette transmission est semblable à celle décrite en référence à la Fig. 4. On peut ainsi dérouler des deux côtés de la machine 300 suivant son sens d'attelage sur le porte-outil 100. On accroît encore la modularité d'usage de la machine.

Sur la Fig. 7c, le porte-outil 100 dispose, dans une seconde variante de réalisation, d'un troisième moteur Mt3 pourvu d'un engrenage Eg3. Il peut coopérer avec un engrenage supplémentaire portant la référence Eg7, porté par la dérouleuse-pailleuse 300 afin de faire fonctionner son organe de paillage 400, alors que la machine 300 est attelée par son second flanc Fc2 sur le porte-outil 100. Cet engrenage Eg7 est monté à l'autre extrémité de l'arbre moteur Am et qui ressort de ce second flanc Fc2. On peut dès lors pailler à gauche, déverser à droite ou inversement, suivant le sens d'attelage de la dérouleuse-pailleuse 300 sur le porte-outil 100.

Dans la dérouleuse-pailleuse de l'invention qui vient d'être décrite, son organe de paillage 400, son moyen d'entraînement 320 de la botte, sont reliés à des engrenages susceptibles de coopérer avec des engrenages portés par un porte-outil 100. Dans une variante de réalisation de la dérouleuse-pailleuse, non représentée, son organe de paillage, son moyen d'entraînement de la botte sont mûs par des moteurs et préférentiellement par des moteurs hydrauliques. La dérouleuse-pailleuse peut être portée directement par un engin de levage, comme un tracteur, un engin porteur pourvu d'un bras télescopique.

Par ailleurs, et dans une variante de réalisation, non représentée, la dérouleuse-pailleuse est pourvue d'un moyen d'accrochage destiné à permettre sa suspension par un convoyeur aérien capable de la déplacer et, le cas échéant, de la faire fonctionner au-dessus d'un espace d'élevage d'animaux. Le fonctionnement de ses organes est avantageusement mis en oeuvre à l'aide de moteurs électriques alimentés par un câble électrique suspendu au convoyeur aérien.

Dans une autre variante de réalisation, le châssis de la dérouleuse-pailleuse comprend au moins un train roulant permettant son déplacement sur le sol par l'intermédiaire d'un engin de traction. Cet engin est par exemple un tracteur. Le fonctionnement de ses organes est avantageusement mis en oeuvre à l'aide de moteurs hydrauliques alimentés par une centrale hydraulique entraînée par la prise de force de l'engin.

Dans encore une autre variante de réalisation, elle est intégrée dans un engin roulant automoteur pour rendre son fonctionnement autonome. Un moteur de l'engin roulant peut entraîner une centrale hydraulique conçue pour alimenter des moteurs hydrauliques couplés, notamment, aux organes de paillage et d'entraînement de la botte.

La dérouleuse-pailleuse de l'invention n'est pas limitée par la configuration particulière de son fond. En effet, l'invention a consisté essentiellement à séparer physiquement les deux fonctions de paillage et de déroulage organisées jusqu'alors d'un même côté dans les dérouleuses-pailleuses de l'art antérieur. Cette construction unilatérale pose en effet des problèmes, car il est difficile d'optimiser une fonction sans dégrader l'autre. Par exemple, il est connu d'utiliser dans une dérouleuse-pailleuse présentée en introduction, deux bras articulés tenant à leurs extrémités, un rotor de paillage mobile entre une position basse et active de paillage et une position haute inactive de déroulage. Dans la position haute, les couteaux du rotor à l'arrêt parviennent à accrocher la nappe qui se déroule par en dessous lorsque l'on déroule la botte. Dès lors un bourrage survient. On peut, certes, augmenter la longueur des bras pour les surélever dans sa position haute, mais on accroît la largeur de la machine dans la position basse de travail du rotor et celui-ci devient trop éloigné de la botte pour pailler correctement.

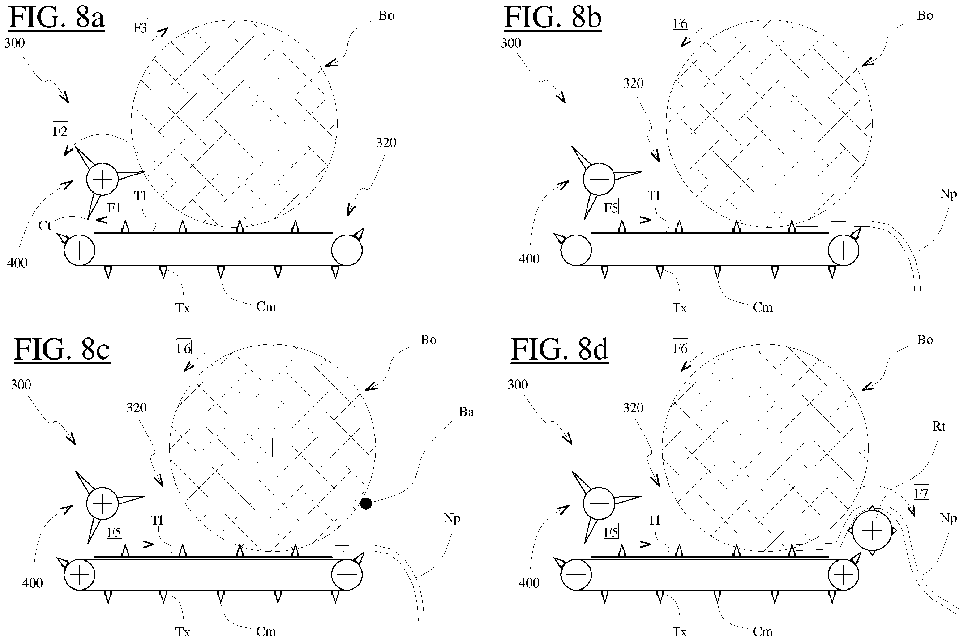

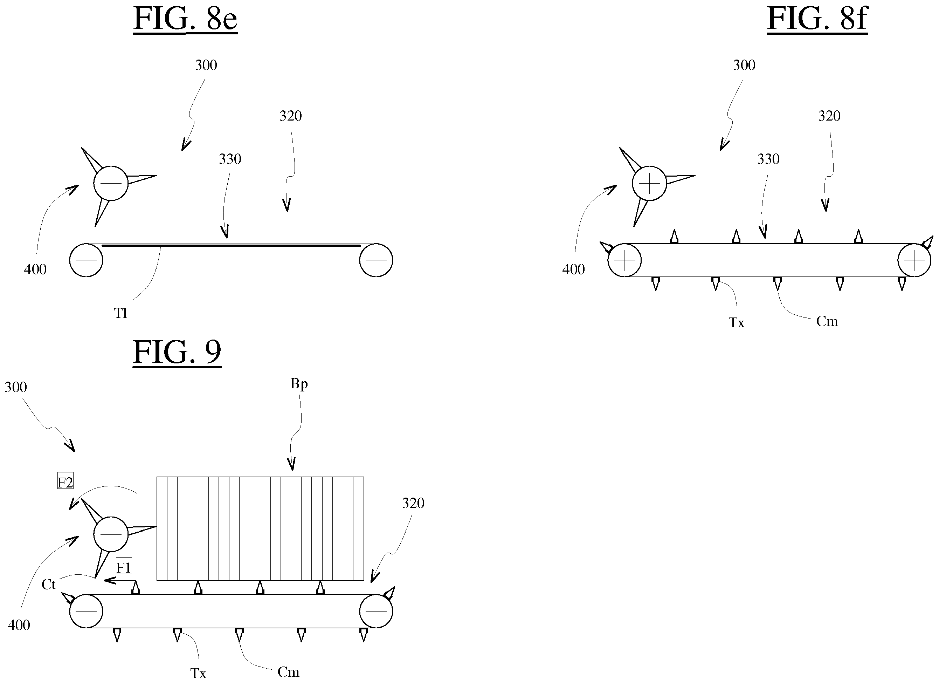

Sur les Figs. 8, sont présentés différents schémas simplifiés de variantes de réalisation de dérouleuses-pailleuses de l'invention et sur lesquels sont montrés uniquement le moyen d'entraînement 320, l'organe de paillage 400 et, le cas échéants, le fond Tl des machines 300.

Sur la Fig. 8a, le fond est ici constitué d'une tôle plane Tl et sensiblement horizontale dans la position de travail de la dérouleuse-pailleuse 300. Le moyen d'entraînement 320 comprend des chaînes portant des tasseaux Tx, équipés éventuellement de crampons Cm, qui glissent dans leur trajet supérieur sur la tôle Tl. La botte Bo est déplacée par le moyen d'entraînement 320 en direction de l'organe de paillage 400, suivant la direction indiquée par la flèche F1. Les fibres végétales de la botte Bo arrachées par les couteaux Ct sont projetées sur la gauche de la machine. Pendant le travail de l'organe de paillage 400, la botte Bo tourne suivant le sens indiqué par la flèche F3.

Sur la Fig. 8b, le sens de déplacement F5 du moyen d'entraînement 320 est inversé et la nappe Np de la botte Bo est déroulée sur la droite de la machine. Un moyen de retenue peut être utilisé pour empêcher la botte entière de sortir de la machine afin de l'obliger à se dérouler suivant le sens indiqué par la flèche F6. Ce moyen de retenue peut être constitué d'une plaque formant obstacle à la sortie de la botte, un bras articulé pourvu d'une coiffe prenant appui sur la partie supérieure de la botte.

Sur la Fig. 8c, une barre Ba, formant un moyen de retenue de la botte Bo est disposée parallèlement à l'organe de paillage 400 et sur le côté opposé de la machine qui est opposé audit organe de paillage. Cette barre Ba oblige la botte à se dérouler alors qu'elle est entraînée par le moyen d'entraînement 320. La barre peut être remplacée par un cylindre et préférentiellement un cylindre monté libre à rotation pour ne pas freiner le mouvement de rotation de la botte cylindrique.

Sur la Fig. 8d, un rotor Rt de décompactage de la botte Bo est disposé parallèlement à l'organe de paillage 400 et sur le côté opposé de la machine qui est opposée audit organe de paillage. Il constitue, d'une part, un moyen de retenue de la botte Bo et, d'autre part, un organe de décompactage de la nappe déroulée. Le rotor Rt est relié à un moyen d'entraînement à rotation pour défaire la nappe déroulée. En fonctionnement, il tourne relativement lentement. Son sens de rotation, inverse à celui F6 de la botte Bo est indiqué par la flèche F7.

Dans le même but, le fond de la machine peut être incliné de manière descendante vers l'organe de paillage 400.

Sur la Fig. 8e, le moyen d'entraînement 320 comprend un tapis roulant dont la bande est guidée horizontalement dans son trajet supérieur par des moyens de guidage appropriés de sorte à former un moyen d'appui pour la botte, comme une tôle Tl plane disposée sous ladite bande. Le tapis roulant forme également un moyen de déplacement de la botte. Il peut être équipé de moyens de déplacement positif de la botte, tels que des tasseaux, pourvus de crampons.

Sur la Fig. 8f, le moyen d'entraînement 320 comprend des chaînes portant des tasseaux Tx. La tension des chaînes suffit à définir la trajectoire des tasseaux Tx dans leur trajet supérieur, c'est-à-dire une géométrie du trajet pratiquement droite ou concave. Le rapprochement des tasseaux Tx formant moyen de déplacement de la botte, suffit pour constituer un moyen d'appui pour la botte. Les tasseaux Tx peuvent être équipés de crampons Cm.

La géométrie plane du moyen d'appui n'est pas la seule envisageable et n'est pas limitative à la forme du moyen de réception de la botte dans la dérouleuse-pailleuse. Le moyen d'appui peut aussi présenter une géométrie concave.

Il est utile de faire remarquer à ce stade de la description que d'autres formats de bottes, que celui cylindrique présenté jusqu'alors, peuvent être paillés dans la dérouleuse-pailleuse de l'invention. La machine est ainsi capable de pailler des bottes parallélépipédiques. Cette situation est présentée sur la Fig. 9. La botte parallélépipédique Bp est déposée sur le moyen d'appui de la machine 300 et le moyen d'entraînement 320 mis en service pour déplacer, suivant la direction indiquée par la flèche F1, ladite botte en direction de l'organe de paillage 400 préalablement mis en service. Le moyen d'appui de la botte Bo est constitué sur cette Fig. 9, de simples tasseaux Tx suffisamment rapprochés. Ils peuvent être éventuellement équipés de crampons Cm.

## Revendications

1. Dérouleuse-pailleuse (300) destinée à, soit pailler une botte de fourrage cylindrique (Bo) ou parallélépipédique (Bp) pour former une litière, soit s'agissant d'une botte cylindrique (Bo) la dérouler sur le sol, dans des mangeoires ou, pour servir d'alimentation à des animaux, tels que des bovins, la dérouleuse-pailleuse (300) comprenant :
- un organe de paillage (400),
- un moyen d'appui destiné à réceptionner une botte (Bo, Bp),
- un moyen d'entraînement (320) de la botte (Bo, Bp) conçu pour la déplacer en direction de l'organe de paillage (400) afin qu'elle puisse être déchiquetée par ledit organe de paillage en fonctionnement,
**caractérisée en ce que** le moyen d'entraînement (320) est pourvu de moyens de déplacement (330) conçus pour déplacer la botte (Bo, Bp) suivant deux sens, de directions opposées (F1, F5), l'un vers l'organe de paillage (400) pour pailler ladite botte et l'autre, à l'opposé de l'organe de paillage (400), pour la dérouler, la dérouleuse-pailleuse (300) incluant un moyen de retenue de la botte (Bo) évitant qu'elle ne soit déchargée pendant son déroulage.

2. Dérouleuse-pailleuse (300) selon la revendication 1, **caractérisée en ce que** le moyen d'appui présente une partie plane (Pp) et sensiblement horizontale dans la position de travail de la dérouleuse-pailleuse (300) et qui se prolonge par une partie incurvée et montante (Pi), l'extrémité libre de la partie plane (Pp) s'étendant jusqu'en dessous de l'organe de paillage (400), la partie incurvée et montante (Pi) prolongeant ladite partie plane du côté opposé à l'organe de paillage (400) en s'étendant vers l'extérieur de la dérouleuse-pailleuse (300) de sorte à former le moyen de retenue de ladite botte.

3. Dérouleuse-pailleuse (300) selon la revendication 2, **caractérisée en ce que** la partie plane (Pp) et la partie incurvée et montante (Pi) sont constituées d'une tôle (Pl) et **en ce que** le moyen de déplacement (330) de la botte (Bo, Bp) comprend des tasseaux (Tx) qui, dans la partie supérieure de leur trajet, glissent sur ladite tôle.

4. Dérouleuse-pailleuse (300) selon l'une quelconque des revendications précédentes, **caractérisée en ce qu'**elle comporte deux flancs (Fc1 et Fc2) et **en ce qu'**un volet (340) est monté de manière articulée entre les deux flancs (Fc1, Fc2), ledit volet étant disposé au-dessus de l'organe de paillage (400) pour faire ricocher les fibres arrachées par l'organe de paillage (400) afin de les diriger suivant une trajectoire (F4) choisie.

5. Dérouleuse-pailleuse (300) selon la revendication 4, **caractérisée en ce qu'**un rouleau (350) est disposé entre les deux flancs (Fc1, Fc2) et au-dessus de l'organe de paillage (400), pour servir de butée à l'encontre de ladite botte alors qu'elle est déplacée par le moyen d'entraînement (320) en direction de l'organe de paillage (400).

6. Dérouleuse-pailleuse (300) selon l'une quelconque des revendications 4 ou 5, **caractérisée en ce que** les axes de deux engrenages (Eg4, Eg5) ressortent au travers du premier flanc (Fc1), les deux engrenages (Eg4, Eg5) étant reliés mécaniquement, au moyen d'entraînement (320) de la botte (Bo, Bp) et à l'organe de paillage (400), pour les faire fonctionner.

7. Dérouleuse-pailleuse (300) selon l'une quelconque des revendications 4 à 6, **caractérisée en ce qu'**elle dispose d'un attelage mécanique sur l'un ou sur ses deux flancs (Fc1, Fc2).

8. Dérouleuse-pailleuse (300) selon l'une quelconque des revendications 4 à 7, **caractérisée en ce que** l'axe d'un engrenage (Eg6) ressort du second flanc (Fc2), ledit engrenage étant relié mécaniquement au moyen d'entraînement (320) de la botte (Bo, Bp), pour le faire fonctionner.

9. Dérouleuse-pailleuse (300) selon l'une quelconque des revendications 4 à 8, **caractérisée en ce que** l'axe d'un engrenage (Eg7) ressort du second flanc (Fc2), ledit engrenage étant relié mécaniquement à l'organe de paillage (400) de la botte (Bo, Bp), pour le faire fonctionner.

10. Dérouleuse-pailleuse (300) selon l'une quelconque des revendications 6 à 9, **caractérisée en ce que** le moyen d'entraînement (320) comprend un arbre (C1) pourvu de deux pignons, d'un cylindre (C2), qui sont tenus entre les deux flancs (Fc) et autour desquels peuvent circuler en boucle deux chaînes portant lesdits tasseaux (Tx) et **en ce qu'**une transmission par chaîne et pignons (Pn1, Pn2) relie l'engrenage (Eg4) avec l'arbre (C1), le premier pignon (Pn1) étant coaxial à l'axe dudit engrenage (Eg4), le second pignon (Pn2) étant coaxial à l'axe dudit arbre (C1).

11. Dérouleuse-pailleuse (300) selon l'une quelconque des revendications 9 ou 10, **caractérisée en ce que** l'organe de paillage (400) comprend un arbre moteur (Am) entouré d'un cylindre portant en périphérie des couteaux (Ct) et qui, pendant leur rotation, peuvent grignoter la périphérie de la botte (Bo, Bp) pour la défragmenter, un engrenage (Eg5, Eg7) étant monté de manière coaxiale à une extrémité ou aux deux extrémités de l'axe dudit arbre moteur (Am).

12. Dérouleuse-pailleuse (300) selon l'une quelconque des revendications 5 à 11, **caractérisée en ce qu'**une bavette (Ba1), est disposée au-dessus du rouleau (350), entre les flancs (Fc).

13. Dérouleuse-pailleuse (300) selon l'une quelconque des revendications précédentes, **caractérisée en ce qu'**une seconde bavette (Ba2) est disposée sous l'extrémité du moyen d'entraînement (320) sortant sous l'organe de paillage (400).

14. Dérouleuse-pailleuse (300) selon l'une quelconque des revendications 1 à 5 et 7, **caractérisée en ce que** l'organe de paillage (400), le moyen d'entraînement (320), sont reliés respectivement à deux moteurs et préférentiellement des moteurs hydrauliques.

15. Dérouleuse-pailleuse (300) selon l'une quelconque des revendications 1 à 13, **caractérisée en ce qu'**elle est associée à un porte-outil (100) destiné à être porté par un engin de levage pour la déplacer, la faire fonctionner.

16. Dérouleuse-pailleuse (300) selon la revendication 15, **caractérisée en ce que** le porte-outil (100) comprend au moins deux engrenages (Eg1, Eg2 ; Eg3) conçus et disposés de manière à coopérer avec les engrenages (Eg4-Eg7) portés par ladite dérouleuse-pailleuse.

17. Dérouleuse-pailleuse (300) selon l'une quelconque des revendications 1 à 14, **caractérisée en ce qu'**elle est pourvue d'un moyen d'accrochage destiné à permettre sa suspension par un convoyeur aérien capable de la déplacer.

18. Dérouleuse-pailleuse (300) selon l'une quelconque des revendications 1 à 14, **caractérisée en ce qu'**elle intègre un châssis porté par au moins un train roulant permettant son déplacement sur le sol par l'intermédiaire d'un engin de traction.

19. Dérouleuse-pailleuse (300) selon l'une quelconque des revendications 1 à 14, **caractérisée en ce qu'**elle est intégrée dans un engin roulant automoteur.

## Patentansprüche

1. Strohabwickel- und -Verteilungsvorrichtung (300), welche dafür vorgesehen ist, entweder einen zylindrischen (Bo) oder quaderförmigen (Bp) Strohfutter-Ballen zu mulchen, um eine Streu zu bilden, sollte es sich um einen zylindrischen Ballen (Bo) handeln, ihn auf dem Boden abzurollen, in die Futtertröge oder um als Versorgung für Tiere zu dienen, wie beispielsweise Rinder, wobei die Strohabwickel- und
- Verteilungsvorrichtung (300) Folgendes aufweist:
- ein Organ zum Mulchen (400),
- ein Anschlagmittel, welches dafür vorgesehen ist, einen Ballen (Bo, Bp) in Empfang zu nehmen,
- ein Mittel zum Transport (320) des Ballens (Bo, Bp), welches dafür ausgelegt ist, ihn in Richtung des Organs zum Mulchen (400) zu bewegen, damit er durch das laufende Organ zum Mulchen zerkleinert werden kann, **dadurch gekennzeichnet, dass** das Transportmittel (320) mit Bewegungsmitteln (330) versehen ist, welche dafür ausgelegt sind, den Ballen (Bo, Bp) gemäß zweier, entgegengesetzte Richtungen (F1, F5), die eine in Richtung auf das Organ zum Mulchen (400) zu, um den Ballen zu mulchen, und die andere entgegengesetzt zu dem Organ zum Mulchen (400), um ihn abzuwickeln, wobei die Strohabwickel- und -Verteilungsvorrichtung (300) ein Mittel zum Zurückhalten des Ballens (Bo) enthält, welches verhindert, dass er während seines Abrollens abgeladen wird.

2. Strohabwickel- und -Verteilungsvorrichtung (300) nach Anspruch 1, **dadurch gekennzeichnet, dass** das Anschlagmittel einen Abschnitt (Pp) aufweist, welcher eben und im Wesentlichen horizontal in der Arbeitsposition der Strohabwickel- und - Verteilungsvorrichtung (300) ist und welcher sich über einen gekrümmten und ansteigenden Abschnitt (Pi) ausdehnt, wobei sich das freie Ende des ebenen Abschnitts (Pp) bis unterhalb des Organs zum Mulchen (400) erstreckt, wobei der gekrümmte und ansteigende Abschnitt (Pi) den ebenen Abschnitt auf der dem Organ zum Mulchen (400) gegenüber liegenden Seite verlängert, indem er sich in Richtung auf den Außenbereich der Strohabwickel- und -Verteilungsvorrichtung (300) erstreckt, um das Mittel zum Zurückhalten des Ballens zu bilden.

3. Strohabwickel- und -Verteilungsvorrichtung (300) nach Anspruch 2, **dadurch gekennzeichnet, dass** der ebene Abschnitt (Pp) und der gekrümmte und ansteigende Abschnitt (Pi) aus einem Blech (Pl) gebildet sind und dass das Mittel zum Bewegen (330) des Ballens (Bo, Bp) Leisten (Tx) aufweist, welche im oberen Abschnitt ihrer Bahn auf dem Blech gleiten.

4. Strohabwickel- und -Verteilungsvorrichtung (300) nach einem der vorhergehenden Ansprüche, **dadurch gekennzeichnet, dass** sie zwei Flanken (Fc1 und Fc2) aufweist und dass eine Klappe (340) zwischen den beiden Flanken (Fc1, Fc2) gelenkig montiert ist, wobei die Klappe oberhalb des Organs zum Mulchen (400) angeordnet ist, um die von dem Organ zum Mulchen (400) herausgerissenen Fasern abprallen zu lassen, um sie in eine gewünschte Bahn (F4) zu lenken.

5. Strohabwickel- und -Verteilungsvorrichtung (300) nach Anspruch 4, **dadurch gekennzeichnet, dass** eine Rolle (350) zwischen den beiden Flanken (Fc1, Fc2) und oberhalb des Organs zum Mulchen (400) angeordnet ist, um als Anschlag gegen den Ballen zu dienen, wenn er durch das Transportmittel (320) in Richtung des Organs zum Mulchen (400) bewegt wird.

6. Strohabwickel- und -Verteilungsvorrichtung (300) nach einem der Ansprüche 4 oder 5, **dadurch gekennzeichnet, dass** die Achsen zweier Verzahnungen (Eg4, Eg5) quer durch die erste Flanke (Fc1) hervortreten, wobei die beiden Verzahnungen (Eg4, Eg5) mechanisch mit dem Mittel zum Transport (320) des Ballens (Bo, Bp) und mit dem Organ zum Mulchen (400) verbunden sind, um sie arbeiten zu lassen.

7. Strohabwickel- und -Verteilungsvorrichtung (300) nach einem der Ansprüche 4 bis 6, **dadurch gekennzeichnet, dass** sie über eine mechanische Kupplung an einer der beiden Flanken (Fc1, Fc2) verfügt.

8. Strohabwickel- und -Verteilungsvorrichtung (300) nach einem der Ansprüche 4 bis 7, **dadurch gekennzeichnet, dass** die Achse einer Verzahnung (Eg6) aus der zweiten Flanke (Fc2) hervortritt, wobei die Verzahnung mechanisch mit dem Mittel zum Transport (320) des Ballens (Bo, Bp) verbunden ist, um es arbeiten zu lassen.

9. Strohabwickel- und -Verteilungsvorrichtung (300) nach einem der Ansprüche 4 bis 8, **dadurch gekennzeichnet, dass** die Achse einer Verzahnung (Eg7) aus der zweiten Flanke (Fc2) hervortritt, wobei die Verzahnung mechanisch mit dem Organ zum Mulchen (400) des Ballens (Bo, Bp) verbunden ist, um es arbeiten zu lassen.

10. Strohabwickel- und -Verteilungsvorrichtung (300) nach einem der Ansprüche 6 bis 9, **dadurch gekennzeichnet, dass** das Transportmittel (320) eine Welle (C1) aufweist, welche mit zwei Zahnrädern und einem Zylinder (C2) versehen ist, welche zwischen den beiden Flanken (Fc) gehalten sind und um welche zwei Ketten, welche die Leisten (Tx) tragen, in Endlosschleife herum laufen können, und dass eine Übertragung durch Kette und Zahnräder (Pn1, Pn2) die Verzahnung (Eg4) mit der Welle (C1) verbindet, wobei das erste Zahnrad (Pn1) koaxial zur Achse der Verzahnung (Eg4) ist und wobei das zweite Zahnrad (Pn2) koaxial zur Achse der Welle (C1) ist.

11. Strohabwickel- und -Verteilungsvorrichtung (300) nach einem der Ansprüche 9 oder 10, **dadurch gekennzeichnet, dass** das Organ zum Mulchen (400) eine Motorwelle (Am) aufweist, welche von einem Zylinder umgeben ist, welcher über den Umfang Messer (Ct) trägt und welche während ihrer Drehung den Umfang des Ballen (Bo, Bp) allmählich abbauen können, um ihn zu defragmentieren, wobei eine Verzahnung (Eg5, Eg7) auf koaxiale Weise zu einem Ende oder zu beiden Enden der Achse der Motorwelle (Am) montiert ist.

12. Strohabwickel- und -Verteilungsvorrichtung (300) nach einem der Ansprüche 5 bis 11, **dadurch gekennzeichnet, dass** ein Abweisblech (Ba1) oberhalb der Rolle (350) zwischen den Flanken (Fc) angeordnet ist.

13. Strohabwickel- und -Verteilungsvorrichtung (300) nach einem der vorhergehenden Ansprüche, **dadurch gekennzeichnet, dass** ein zweites Abweisblech (Ba2) unter dem Ende des Transportmittels (320) angeordnet ist, welches unter dem Organ zum Mulchen (400) hervortritt.

14. Strohabwickel- und -Verteilungsvorrichtung (300) nach einem der Ansprüche 1 bis 5 und 7, **dadurch gekennzeichnet, dass** das Organ zum Mulchen (400) und das Transportmittel (320) jeweils mit zwei Motoren, und vorzugsweise mit Hydraulikmotoren, verbunden sind.

15. Strohabwickel- und -Verteilungsvorrichtung (300) nach einem der Ansprüche 1 bis 13, **dadurch gekennzeichnet, dass** sie mit einem Werkzeugträger (100) verknüpft ist, welcher dafür vorgesehen ist, von einem Hebezeug getragen zu werden, um sie zu bewegen und arbeiten zu lassen.

16. Strohabwickel- und -Verteilungsvorrichtung (300) nach Anspruch 15, **dadurch gekennzeichnet, dass** der Werkzeugträger (100) mindestens zwei Verzahnungen (Eg1, Eg2; Eg3) aufweist, welche dafür ausgelegt und angeordnet sind, um mit den von der Strohabwickel- und -Verteilungsvorrichtung getragenen Verzahnungen (Eg4-Eg7) zusammenzuwirken.

17. Strohabwickel- und -Verteilungsvorrichtung (300) nach einem der Ansprüche 1 bis 14, **dadurch gekennzeichnet, dass** sie mit einem Einhängemittel versehen ist, welches dafür vorgesehen ist, ihr Aufhängen durch einen Hängeförderer zu ermöglichen, welcher sie zu bewegen in der Lage ist.

18. Strohabwickel- und -Verteilungsvorrichtung (300) nach einem der Ansprüche 1 bis 14, **dadurch gekennzeichnet, dass** sie ein Fahrgestell integriert, welches von mindesten einem Fahrwerk getragen wird, das dessen Bewegung auf dem Boden mit Hilfe einer Antriebsmaschine ermöglicht.

19. Strohabwickel- und -Verteilungsvorrichtung (300) nach einem der Ansprüche 1 bis 14, **dadurch gekennzeichnet, dass** sie eine selbst fahrende Maschine integriert.

## Claims

1. Unroller-spreader (300) intended to either spread a cylindrical (Bo) or parallelepipedal (Bp) fodder bale to form a bed or, in the case of a cylindrical bale (Bo), to unroll it on the ground, in feed troughs or to serve to feed animals, such as cattle, the unroller-spreader (300) comprising:
- a spreading member (400),
- a bearing means intended to receive a bale (Bo, Bp),
- a means (320) for driving the bale (Bo, Bp) that is designed to move it in the direction of the spreading member (400) so that it can be shredded by said spreading member in operation,
**characterized in that** the drive means (320) is provided with movement means (330) designed to move the bale (Bo, Bp) in two opposite directions (F1, F5), one towards the spreading member (400) in order to spread said bale and the other, away from the spreading member (400), in order to unroll it, the unroller-spreader (300) including a means for retaining the bale (Bo) that prevents it from being unloaded while it is being unrolled.

2. Unroller-spreader (300) according to Claim 1, **characterized in that** the bearing means has a flat and substantially horizontal part (Pp) in the working position of the unroller-spreader (300) that is prolonged by a curved and rising part (Pi), the free end of the flat part (Pp) extending to below the spreading member (400), the curved and rising part (Pi) prolonging said flat part on the opposite side to the spreading member (400) while extending outwardly from the unroller-spreader (300) so as to form the means for retaining said bale.

3. Unroller-spreader (300) according to Claim 2, **characterized in that** the flat part (Pp) and the curved and rising part (Pi) are constituted by a metal sheet (Pl), and **in that** the means (330) for moving the bale (Bo, Bp) comprises cleats (Tx) which, in the upper part of their travel, slide on said metal sheet.

4. Unroller-spreader (300) according to any one of the preceding claims, **characterized in that** it comprises two flanks (Fc1 and Fc2) and **in that** a flap (340) is mounted in an articulated manner between the two flanks (Fc1, Fc2), said flap being arranged above the spreading member (400) in order to cause the fibres torn off by the spreading member (400) to ricochet in order to direct them along a chosen path (F4).

5. Unroller-spreader (300) according to Claim 4, **characterized in that** a roller (350) is arranged between the two flanks (Fc1, Fc2) and above the spreading member (400), in order to serve as a stop against said bale while it is moved by the drive means (320) in the direction of the spreading member (400).

6. Unroller-spreader (300) according to either one of Claims 4 and 5, **characterized in that** the axles of two gears (Eg4, Eg5) emerge through the first flank (Fc1), the two gears (Eg4, Eg5) being connected mechanically to the means (320) for driving the bale (Bo, Bp) and to the spreading member (400) in order to make them operate.

7. Unroller-spreader (300) according to any one of Claims 4 to 6, **characterized in that** it has a mechanical hitch on one of or on its two flanks (Fc1, Fc2).

8. Unroller-spreader (300) according to any one of Claims 4 to 7, **characterized in that** the axle of a gear (Eg6) emerges from the second flank (Fc2), said gear being connected mechanically to the means (320) for driving the bale (Bo, Bp) in order to make it operate.

9. Unroller-spreader (300) according to any one of Claims 4 to 8, **characterized in that** the axle of a gear (Eg7) emerges from the second flank (Fc2), said gear being connected mechanically to the member (400) for spreading the bale (Bo, Bp) in order to make it operate.

10. Unroller-spreader (300) according to any one of Claims 6 to 9, **characterized in that** the drive means (320) comprises a shaft (C1) provided with two pinions and a cylinder (C2) which are held between the two flanks (Fc) and about which there can circulate in a loop two chains bearing said cleats (Tx), and **in that** a chain and pinion (Pn1, Pn2) transmission connects the gear (Eg4) to the shaft (C1), the first pinion (Pn1) being coaxial to the axle of said gear (Eg4), the second pinion (Pn2) being coaxial to the axle of said shaft (C1).

11. Unroller-spreader (300) according to either one of Claims 9 and 10, **characterized in that** the spreading member (400) comprises a drive shaft (Am) surrounded by a cylinder bearing cutters (Ct) at the periphery and which, during their rotation, can nibble away at the periphery of the bale (Bo, Bp) in order to defragment it, a gear (Eg5, Eg7) being mounted in a coaxial manner to one end or to the two ends of the axle of said drive shaft (Am).

12. Unroller-spreader (300) according to any one of Claims 5 to 11, **characterized in that** a skirt (Ba1) is arranged above the roller (350) between the flanks (Fc).

13. Unroller-spreader (300) according to any one of the preceding claims, **characterized in that** a second skirt (Ba2) is arranged below the end of the drive means (320) emerging below the spreading member (400).

14. Unroller-spreader (300) according to any one of Claims 1 to 5 and 7, **characterized in that** the spreading member (400) and the drive means (320) are respectively connected to two motors, preferably hydraulic motors.

15. Unroller-spreader (300) according to any one of Claims 1 to 13, **characterized in that** it is combined with a tool holder (100) intended to be carried by a lifting unit in order to move it and make it operate.

16. Unroller-spreader (300) according to Claim 15, **characterized in that** the tool holder (100) comprises at least two gears (Eg1, Eg2; Eg3) designed and arranged so as to cooperate with the gears (Eg4-Eg7) borne by said unroller-spreader.

17. Unroller-spreader (300) according to any one of Claims 1 to 14, **characterized in that** it is provided with an attachment means intended to allow it to be suspended by an aerial conveyor capable of moving it.

18. Unroller-spreader (300) according to any one of Claims 1 to 14, **characterized in that** it incorporates a chassis carried by at least one running gear allowing it to be moved on the ground by way of a traction unit.

19. Unroller-spreader (300) according to any one of Claims 1 to 14, **characterized in that** it is incorporated in a self-propelled rolling vehicle.
